Europäisches Patentamt

European Patent Office

Office européen des brevets

(11) Publication number: **0 150 979**
**B1**

# EUROPEAN PATENT SPECIFICATION

(45) Date of publication of patent specification: 24.05.89

(51) Int. Cl.⁴: **B 29 C 51/14**

(21) Application number: 85300434.9

(22) Date of filing: 23.01.85

(54) **Laminated tubs.**

(30) Priority: 25.01.84 GB 8401929

(43) Date of publication of application:
07.08.85 Bulletin 85/32

(45) Publication of the grant of the patent:
24.05.89 Bulletin 89/21

(84) Designated Contracting States:
AT BE CH DE FR GB IT LI NL SE

(56) References cited:
DE-A-1 919 121
DE-A-2 437 421
DE-A-2 462 050
DE-A-2 504 322
GB-A-1 174 426
US-A-3 878 018

(73) Proprietor: UNILEVER PLC
Unilever House Blackfriars P.O. Box 68
London EC4P 4BQ (GB)
(84) GB
(73) Proprietor: UNILEVER NV
Burgemeester s'Jacobplein 1 P.O. Box 760
NL-3000 DK Rotterdam (NL)
(84) BE CH DE FR IT LI NL SE AT

(72) Inventor: Stoltzenberg, Dietrich Jurgen
Walderseestrasse 87
D-2000 Hamburg 52 (DE)
Inventor: Tyler, Frank Scholes
33 Greenhill Road Otford
Sevenoaks Kent (GB)

(74) Representative: Litherland, Donald et al
UNILEVER PLC Patents Division P.O. Box 68
Unilever House
London EC4P 4BQ (GB)

Courier Press, Leamington Spa, England.

**Description**

This invention relates to a process for the preparation of containers of the kind indicated in the first part of claim 1.

Containers such as tubs for margarine, ice-cream and other products of the food and other industries, are commonly made from thermoplastic sheet material by thermo-forming methods in which a part of a web comprising the sheet and corresponding to a container blank, is heated and drawn by pressure or vacuum into a mould. The operation is repeated at intervals along the web and the formed containers are cut from the web, leaving a skeleton of surplus scrap material which is usually recovered to save costs. The sheet material is selected to provide a mechanically robust container from an economically thin web and it must also meet other requirements, including in particular avoiding interaction between the container material and its contents. For this reason such containers may be made from laminated sheet material, each lamination being selected to contribute special properties appropriate to its position in the laminate. Thus the inner lamina may be selected for resistance to contamination of the contents and the outer for mechanical strength.

To ensure that the container laminations do not separate, the sheets are first laminated together under pressure if necessary with adhesive and may be heated sufficiently to soften the sheet material and fuse the layers together. When a permanent bond is established between the sheets however, the value of the recovered surplus scrap material is diminished because it cannot readily be separated into its constituent parts.

In USP3878018 there is disclosed a method of the type indicated in the first part of claim 1. Such a method comprises the step of preparing stamping blanks comprising laminated thermoplastic material, in which selective stamping zone areas of a thermoplastic web are first made adhesive, either by high frequency irradiation or by the application of an adhesive coating. Another web is then superimposed on the adhesive side of the first and the entire area of the combined web passed between compression rollers, before the zones are stamped out and parted from the scrap web which is subsequently separated into its constituent layers.

The present invention provides an improved method of making laminated containers by thermoforming in which an effective bond is established between the container layers whereas the scrap sheet material remaining between the containers is readily separable into its constituent layers.

The present invention therefore provides a method for the preparation of containers by thermoforming under pressure of vacuum from discrete areas of a combined web of two or more layers of thermoplastic sheet material in which areas only the layers are bonded together by heat and pressure in the absence of adhesive, the formed containers are parted and the unbonded scrap web remaining separated into its constituent layers, characterized in that the said areas of the sheets are bonded by contact with pressure plate means having a contact surface contour structured in such a way to prevent the enclosure of air while combining the sheets and heated to a temperature at which the layers are fused together in the said areas only.

The layers of sheet material from which the containers are made in accordance with the present invention are therefore not combined to form a laminated sheet, before the thermoforming operations. Instead, separate webs of the sheet material are supplied to a thermoforming station, preferably a multi-cavity moulding machine, and bonding between the webs takes place only in the discrete areas of the combined web which are to be thermoformed.

Since the pressure plates are applied to contact only those areas of the combined web which are to be thermoformed, ie. in the area of each container blank. This facilitates separation of the scrap laminate into its constituent layers for recycling. Similarly, since the extent of fusion between the layers may be controlled by the pressure, temperature and time applied, the thermoformed blank area may be fused to a sufficiently limited extent to permit the constituent layers of the containers themselves to be separated for recycling after usage.

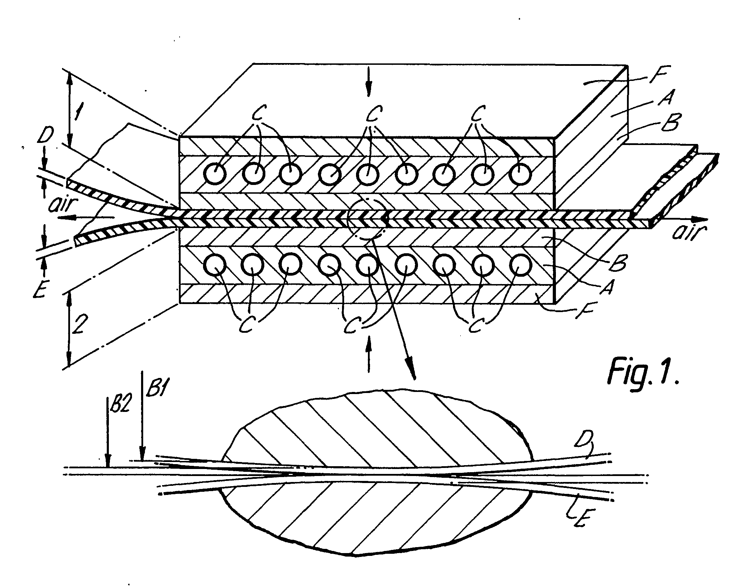

Contact heating pressure plates are used having a surface contour which is structured in such a way to prevent the enclosure of air while combining the different sheet or film layers. These contours are carried out in such a way that the air which might be included will be squeezed from the centre to the edge of the area which will be heated and fused. Their design depends upon the shape of the heated area, which may be circular, elliptical, square or rectangular, corresponding to the required container shape and generally of convex contact surface. The centre part of the heating plates has an increased thickness and this will decrease in the direction to the edges. Fig. 1 shows a general view of a convex heating system. Top and bottom consists of steel plates (A) and aluminium plates (B). The aluminium plates are used to improve heat conduction and distribution. Their thickness at the centre (B1) is greater than their thickness at the edges (B2). This contact heating system is mounted under a holding plate (F) made from insulated materials. Within the steel plates heating elements (C) are installed for electrically heating the contact · heating system. Other ways of heating may be by circulating heated oil through channels worked into the steel plates.

The aluminium plates have a uniform temperature and by touching the plastic sheet layers D and E they start to heat the plastic material surface. As the heating plates move into contact with the plastic sheet surface they touch the plastic sheet first in the central area. This is therefore heated before the other areas which are gradually heated afterwards towards the edges. As the plastic sheets are gradually compressed the air is squeezed to the edges and no inclusion between the two plastic layers occur.

The profile of the heating plates depends on the thickness of the plastic sheets or films to be heated and fused. Preferably the radius is decreased as the thickness of the multiple sheet increases. Generally a radius of 5000—10,000 mm. is preferred with a profile height of 0.1—0.3 mm. for combined webs form 0.3 to 1 mm. thickness.

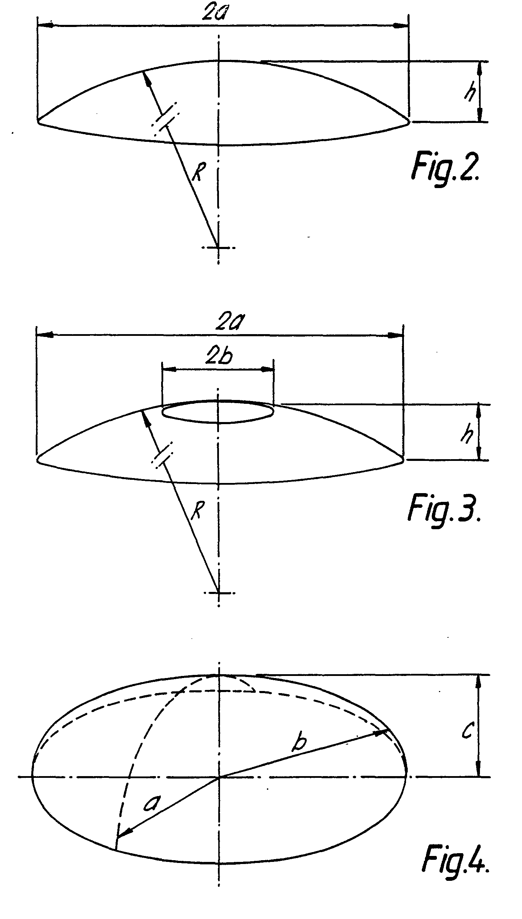

Figs. 2, 3 and 4 illustrate profiled heating plates designed for specific examples. The Radius R of the two circular heating plates in Figs. 2 and 3 was 6250 mm., and the diameter 2a was 100 mm; the height of the profile C in both cases was 0.2±0.05 mm., the heating plate in each case therefore being thicker by this amount in the centre than at the edges. The heating plate in Fig. 2 is in the form of a segment of a sphere and that in Fig. 3 is in the form of a spherical section having a central flat 2b, 10 ml in diameter.

The plates in Figs. 2 and 3 were used in accordance with the invention to heat and fuse a sheet of (BS) of 0.6 mm thickness with a sheet of (PETG) of 0.1 mm. thickness at intervals along webs of the superimposed sheets in areas which were subsequently thermoformed into round tubs for margarine packaging in which the PETG formed a lining for the tubs.

Fig. 4 shows an oblong heating plate with rounded-off corners for heating superimposed webs at intervals along the combined webs for thermoforming oval tubs, the films in this case being PP 0.2 ml. thick and BS 0.6 ml. thick. The heating plates are again approximately 0.2 to 0.3 ml. thicker at the centre than at the edges and the thickness decreases in the direction of the edges. The surface design may be described as a segment of a pressed rotation ellipsoid with the dimensions shown.

Multiple heating stages may be adopted in accordance with the invention, to speed up the progression of the combined webs through the fusion stage. The temperature of the contact plates is preferably 130—175°C, according to the polymers used.

A particular advantage of the invention is that in the absence of adhesive spread between the layers, the rim of containers made in accordance with the invention may be rolled without contamination of the edges by adhesive.

Preferably the containers of the invention are printed on one layer only, the speed of the printing process for which is therefore higher in comparison with printing a single sheet of the full container thickness. Printing may be distorted intentionally in such a manner that the thermoforming process yields the required print design on the finished formed container. In another printed embodiment of the invention, the outer layer is transparent and reverse printed on its inner surface to protect the print from wear and the contents of the container from contamination with the print.

Different combinations of film material may be selected from a wide variety of thermoplastic polymers, including form example the polyolefins, in particular polyethylene (PE), polypropylene (PP) and polystyrene (PS), polyhalohydrocarbons, eg, polyvinylchloride, polyvinylidene chloride and the fluorinated-polyethylenes and polypropylenes, vinylacetates, polyamides and polyesters. More particularly, combinations of polyolefins and polystyrene with polyethylene terephthalate esters of glycol and polyethylene glycols (PETG) are preferred for containers intended for use in the edible fats industry, for example for ice-cream and margarine, while other suitable combinations include polyethylene/ polypropylene, polystyrene/polypropylene and polystyrene/polyethylene terephthalate ester of ethylene glycol or polyethylene glycol.

The following working conditions are given as illustrations of the temperature and contact times found to be appropriate for fusing overlying sheets of the thermoplastic material indicated in the thicknesses shown in mm, together with the temperature of the container mould into which the fused areas were successively thermoformed after preforming. with plug assistance at 140°C:—

| Material | | Temp °C | Time secs. | Mould °C |
|---|---|---|---|---|
| LDPE | 0.3 | | | |
| PP | 0.3 | 153—5 | 15 | 50 |
| | | | | |
| PETG | 0.1 | | | |
| PP | 0.4 | 155—160 | 12 | 50 |
| | | | | |
| PETG | 0.15 | | | |
| PS | 0.5 | 156 | 6 | 40 |
| | | | | |
| PETG | 0.15 | | | |
| PS | 0.6 | | | |
| PETG | 0.15 | 156 | 7 | 40 |

The containers made in accordance with the invention may comprise two or more sheets or films of the same or different thicknesses and three or more layers may, for example be used.

The containers may be formed by pressure or vacuum-forming in which the sheet material is pressed or sucked into a mould. The conventional methods of thermoforming are usually appropriate, provided the temperature and contact pressure, preferably by contact plates, achieve the desired effect of fusing the thermoforming areas of thermoplastic film material and the necessary conditions for the thermoforming process can be applied.

Separate sheets, coming from different take-off rolls, may be combined and fed intermittently in a controlled manner via a system of feed rolls to a heating and pressing station where contact is made with pressure plate means at each of a predetermined succession of container blank zones on the web. The resulting partly fused film combination is then transferred to a thermoforming station registering in succession with the blank zones on the web. The containers are cut from the sheet as they are formed and the surplus waste material collected and separated into its constituent layers.

Example:

Webs of different thermoplastic sheet material are separately transported by rollers to overlay and run together between pairs of upper and lower contact heating pressure plates at open position in a contact heating station. These plates are made from good heat-conducting material eg. aluminium, coated on the contact side with a thin layer of eg. fluorinated polyolefine to prevent adhesion. Each pair of plates can be closed hydraulically or pneumatically to press the webs together. The plates are electrically heated and thermostats maintain a uniform temperature within 1 or 2 degrees, on the surface of the contact side. The temperatures of the different plates may be alike or different as required to fuse the webs together in the contact areas. The pairs of heating plates are spaced apart, to heat only those areas of the film which are later to be thermoformed, and are convex profiled to prevent entrapment of air between the sheets.

At pre-determined intervals the transport of the combined webs is stopped and the pairs of heating plates are closed, pressure, temperature and time being chosen to achieve a slight fusing of the combined web at localities to be substantially thermoformed, the areas not undergoing thermoforming remaining substantially unheated and unfused.

After opening the pairs of plates in the heating station, transport is resumed, taking the web to the next following heating station, of which there may be several, up to five generally being adequate. After leaving the contact heating station area, the combined webs entrance thermoforming area in which a mould is located to register in turn with each fused area of the combined web when it stops. This station may comprise a vacuum or pressure unit with or without an assist plug. As each tub is formed in the mould, cooled and released from the mould it is transported to a cutting station where after cutting the tubs from the web the combined film skeleton may be wound up for subsequent separation into its constituent layers for salvage, or each layer of the skeleton may be separately wound up, separation being readily carried out since the layers are not fused together.

## Claims

1. Process for the preparation of containers by thermoforming under pressure or vacuum from discrete areas of a combined web of two or more layers of thermoplastic sheet material in which areas only the layers are bonded together by heat and pressure in the absence of adhesive, the formed containers are parted and the unbonded scrap web remaining separated into its constituent layers, characterised in that the said areas of the sheets (D, E) are bonded by contact with pressure plate means (A, B) having a generally convex contact surface contour structured in such a way to prevent the enclosure of air while combining the sheets and heated to a temperature at which the layers (D, E) are fused together in the said areas only.

2. Process according to claim 1 wherein the pressure plate means (A, B) comprises a generally convex contact surface of radius (R) 5000 to 10,000 mm. and a profile height (C) 0.1—0.3 mm.

3. Process according to claim 1 or 2 wherein separate sheets from different rollers are superimposed to provide a web (D, E) which is fed first to a heating and pressing station where the web is heated and pressed by contact plate means (A, B) at a temperature at which the combined layers are fused at predetermined thermoforming areas and then to a thermoforming station where containers are thermoformed from the said areas, cutting the formed containers from the web and separating the skeletal remains of the web into its constituent layers.

4. Process according to any of the preceding claims wherein print is applied to one or some only of the layers of the container blanks.

5. Process according to Claim 5 wherein the print is applied in reverse to the inner face of an outer transparent layer.

## Patentansprüche

1. Verfahren zur Herstellung von Behältern durch Warmformen unter Druck oder Vakuum aus gesonderten Zonen einer Kombinationsbahn aus zwei oder mehr Schichten einer thermoplastischen Folie, wobei lediglich in diesen Zonen die Schichten mittels Wärme und Druck und ohne Haftmittel miteinander verbunden werden, die gebildeten Behälter abgetrennt werden und die unverbundene Restbahn in den bestehenden Schichten getrennt bleibt, dadurch gekennzeichnet, daß die genannten Zonen der Folien (D,

4

E) durch die Berührung mit Druckplatten (A, B) verbunden werden, wobei die Druckplatten eine im allgemeinen konvexe Berührungsflächenkontur aufweisen, die so ausgebildet ist, daß ein Lufteinschluß während des Zusammenbringens der Folien verhindert wird, und auf eine Temperatur, bei der die Schichten (D, E) nur in den Zonen verschmelzen, aufgeheizt werden.

2. Verfahren nach Anspruch 1, dadurch gekennzeichnet, daß die Druckplatten (A, B) eine im allgemeinen konvexe Berührungsfläche mit einem Radius (R) von 5000 bis 10.000 mm und einer Profilhöhe (C) von 0,1 bis 0,3 mm aufweisen.

3. Verfahren nach Anspruch 1 oder 2, dadurch gekennzeichnet, daß getrennte Folien von unterschiedlichen Rollen zur Schaffung einer Bahn (D, E) übereinander angeordnet werden, daß die Bahn (D, E) zuerst einer Erwärmungs- und Pressstation, an der die Bahn mittels der Druckplatten (A, B) auf eine Temperatur, bei der die kombinierten Schichten an vorbestimmten Warmformzonen verschmelzen, erwärmt und gepreßt wird, und dann einer Warmformstation zugeführt wird, an der die Behälter aus den Zonen warmgeformt werden, daß die geformten Behälter aus der Bahn ausgeschnitten werden und die Restbahn in die bestehenden Schichten getrennt wird.

4. Verfahren nach einem der vorhergehenden Ansprüche, dadurch gekennzeichnet, daß eine Bedruckung auf einer oder einiger der Schichten der Behälterzuschnitte aufgebracht wird.

5. Verfahren nach Anspruch 5, dadurch gekennzeichnet, daß die Bedruckung umgekehrt auf der Innenfläche einer äußeren transparenten Schicht aufgebracht wird.

## Revendications

1. Procédé de préparation de récipients par thermoformage sous pression ou sous vide à partir de zones séparées d'une bande combinée de deux ou plusieurs couches d'une matière thermoplastique en feuille, zones dans lesquelles seules les couches sont liées ensemble par la chaleur et la pression en l'absence d'un adhésif, les récipients formés sont séparés et les déchets de la bande restante sont séparés en couches constitutives, caractérisé en ce que lesdites zones des feuilles (D, E) sont liées par contact avec des plaques de pression (A, B) ayant en général un contour convexe de surface de contact élaboré de façon à empêcher l'emprisonnement d'air tout en combinant les feuilles et on chauffe à une température à laquelle les couches (D, E) sont fusionnées mais seulement dans lesdites zones.

2. Procédé selon la revendication 1, dans lequel les plaques de pression (A, B) comprennent une surface de contact sensiblement convexe ayant un rayon (R) de 5000 à 10.000 mm et une hauteur de profil (C) de 0,1 à 0,3 mm.

3. Procédé selon la revendication 1 ou 2, dans lequel des feuilles séparées provenant de rouleaux différents sont superposées pour former une bande (D, E) qui est d'abord amenée à un poste de chauffage et de pression où la bande est chauffée et pressée par des moyens de plaques de contact (A, B) à une température à laquelle les couches combinées sont fusionnées en des zones prédéterminées de thermoformage et ensuite à un poste de thermoformage où les récipients sont thermoformés à partir desdites zones, les récipients formés étant sectionnés de la bande et les déchets d'ossature de la bande sont séparés en couches constitutives.

4. Procédé selon l'une quelconque des revendications précédentes, dans lequel on imprime l'une des couches ou seulement certaines des couches des ébauches de récipients.

5. Procédé selon la revendication 4, dans lequel on imprime en inversion sur la face intérieure d'une couche transparente extérieure.

Fig.1.

2a

R

h

**Fig.2.**

2a

2b

R

h

**Fig.3.**

b

a

c

**Fig.4.**